# NEUE EUROPÄISCHE PATENTSCHRIFT

(11) **EP 1 232 683 B2**
(45) Veröffentlichungstag und Bekanntmachung des Hinweises auf die Entscheidung über den Einspruch: **11.04.2007**
(45) Hinweis auf die Patenterteilung: 31.03.2004
(21) Anmeldenummer: 02002210.9
(22) Anmeldetag: 30.01.2002
(51) Int. Cl.: A01F 12/40, A01F 29/02

(54) **Förderelemente und Zerkleinerungseinrichtung für landwirtschaftliche Arbeitsmaschine**
Conveyor elements and shredder device for agricultural machine
Eléments entraîneurs ef dispositif broyeur pour machine agricole

(30) Priorität: 16.02.2001 DE 10107776
(43) Veröffentlichungstag der Anmeldung: 21.08.2002
(73) Patentinhaber: CLAAS Selbstfahrende Erntemaschinen GmbH, 33428 Harsewinkel (DE)
(72) Erfinder: Heidjann, Franz, 33428 Harsewinkel (DE); Kühn, Bodo, 33330 Gütersloh (DE); Bognar, Jozsef, 2100 Gödöllö (HU)

(56) Entgegenhaltungen:
- EP-A- 0 606 087
- EP-A- 0 960 561
- DE-A- 3 925 701
- FR-A- 1 256 708
- FR-A- 1 427 499
- GB-A- 1 043 712
- US-A- 2 842 175
- US-A- 3 103 241
- US-A- 3 599 412
- US-A- 4 087 051
- US-A- 5 042 973
- US-A- 5 232 405
- US-A- 5 482 508
- US-A- 5 928 080
- US-A- 6 120 373
- Prospekt: Universelle Einrichtung zu den Mähdreschern, "DON-1200" und "DON-1500" für das Verarbeiten des nicht gekörnten Teiles der Ernte.

## Beschreibung

Die Erfindung betrifft eine Zerkleinerungseinrichtung mit Förderelementen gemäß dem jeweilgen Oberbegriff der Ansprüche 1 und 11.

Eine gattungsgemäße Zerkleinerungseinrichtung ist in der US 5,482,508 offenbart. Diese Zerkleinerungseinrichtung verfügt über einen mit Gutförder- und -zerkleinerungsschlegeln besetzen Häckselrotor, wobei die Gutförderschlegel zweiteilig ausgeführt sind und mittels Schraubverbindung frei drehbar von an der Achse des Häckselrotors befestigten Halteflanschen aufgenommen werden. Die einen gemeinsamen Gutförderschlegel bildenden Schlegelteile sind mittels einenends angeordneter Distanzbuchse so zueinander beabstandet, dass sich zwischen ihnen ein sich über die gesamte Länge des Gutförderschlegels erstreckender Durchgangskanal ergibt. Dieser Durchgangsspalt ist in seiner Breite so bemessen, dass ein mit der Ummantelung des Häckselrotors drehfest verbundenes Schneidmesser diesen Durchgangsspalt kollisionsfrei durchsetzen kann, wenn der Häckselrotor in Drehbewegung versetzt wird und die Gutförderschlegel fliehkraftbedingt eine radial zur Achse des Häckselrotors ausgerichtete Position einnehmen. Damit das von den Gutförderschlegeln zu den in die Rotorgehäusewand eingelassenen Schneidmessern geförderte Erntegut in diesem Bereich in, die Verrottung begünstigende kleine Stücke zerteilt werden kann, ist es erforderlich, dass sich eine möglichst große Zahl von Schneidkanten ergibt an denen das Erntegut zerkleinerbar ist. Andererseits muss eine derartig ausgeführte Zerkleinerungseinrichtung so dimensioniert sein, dass sie den ihr zugeführten Erntegutstrom sicher abfördert. Neben der Rotordrehzahl wurde dies in der Vergangenheit dadurch erreicht, dass gemäß der US 5,232,405 den Gutförderschlegeln in ihrem dem Rotor abgewandten Bereich eine paddelartige Verlängerung angeformt war. Dabei reduzierte sich jedoch die Zahl der einsetzbaren Schneidelemente erheblich, da stets nur in dem Zwischenraum zwischen benachbarten Gutförderschlegeln Schneidelemente angeordnet werden konnten.

Dieser Nachteil wird mit einer Gutförderschlegelausführung nach der US 5,482,508 dadurch vermieden, dass die Gutförderschlegel zweiteilig ausgeführt und so zueinander beabstandet angeordnet sind, dass nun auch im Bereich jedes Gutförderschlegels Schneidmesser in die Rotorummantelung eingelassen werden können, sodass eine erheblich größere Anzahl von Schnittstellen und damit ein deutlich kleinstückigeres Häckselgut erzeugt werden kann. Die geteilte Ausführung der Gutförderschlegel hat jedoch den Nachteil, dass die Förderleistung erheblich reduziert und der nicht von den feststehenden Schneidmessern durchsetzte Bereich zwischen den beiden Teilen eines Gutförderschlegels von langhalmigem Erntegut verstopft werden kann. Neben einem höheren Energiebedarf zum Antrieb des Häckselrotors führ dies vor allem dazu, dass die Bewegung des Erntegutes durch die Zerkleinerungseinrichtung behindert wird. Zudem verringert die geteilte Ausführung der Gutförderschlegel deren Saugund Gutabförderleistung erheblich.

Der Erfindung liegt deshalb die Aufgabe zugrunde, eine Zerkleinerungseinrichtung der eingangs genannten Art und zugehörige Gutförderelemente so weiterzubilden, dass die beschriebenen Nachteile des Standes der Technik vermeidend eine hohe Durchsatzleistung und eine intensive Zerkleinerung des Erntegutes erreicht werden.

Erfindungsgemäß wird die Aufgabe durch Förderelemente einer Zerkleinerungseinrichtung mit den kennzeichnenden Merkmalen des Anspruchs 1 und einer Zerkleinerungseinrichtung gemäß den kennzeichnenden Merkmalen des Anspruchs 11 gelöst.

Indem die Förderelemente von wenigsten zwei Schenkeln gebildet werden, die zumindest über einem Teil ihrer Längserstreckung über einen Quersteg miteinander verbunden sind, wird ein Förderelement geschaffen, dass zumindest über einem Teil seiner Länge schaufelförmig ausgeführt ist. Ein derartig ausgeführtes Förderelement eignet sich, einer Schaufel gleich, besonders gut zur Abförderung großer Mengen von Material wie Erntegut oder Luft.

Um die Erntegutförderleistung und die Saugleistung von als Häckselrotoren ausgeführten Zerkleinerungseinrichtung zu erhöhen, ist es besonders vorteilhaft, wenn derartige Zerkleinerungseinrichtung über eine Vielzahl dieser schaufelförmigen Förderlemente verfügen.

Damit jedes der eingesetzten erfindungsgemäßen Förderelemente eine optimale Saug- und Gutförderleistung entwickeln kann, sind in einer weiteren vorteilhaften Ausgestaltung der Erfindung die Förderelemente in einer Reihe und wenigstens teilweise zueinander fluchtend angeordnet, wobei die Förderelemente benachbarter Reihen von Förderelementen in Achsrichtung der Rotorwelle zueinander versetzt angeordnet sind.

In vorteilhafter Weiterbildung der Erfindung kann der die Schenkel des Förderelements verbindende Quersteg über eine Aussparung von beliebiger Breite verfügen, durch die ein mit dem Gehäuse des Häckselrotors drehfest verbundenes Schneidelement durchtreten kann, sodass auch im Bereich der Förderelemente ein Schneiden des Emtegutes möglich wird und dennoch die Saug- und Förderleistung des Förderelementes hoch bleibt.

In einer weiteren vorteilhaften Ausbildung kann die Aussparung entweder schlitzförmig zur Aufnahme eines oder mehrerer Schneidelemente sein oder von den Schenkeln des Förderelementes begrenzt werden, sodass auch auf diese Weise mehrere Schneidelemente gleichzeitig die Aussparung des Förderelementes durchsetzen können.

Damit das von den schaufelförmig ausgeführten Förderelementen aufgenommene Emtegut verstopfungsfrei wieder abgegeben werden kann und die Förderelemente zudem eine große Luftmenge fördern, ist in einer weiteren vorteilhaften Ausgestaltung der Erfindung der Quersteg in Richtung seines frontseitigen, der Rotorwelle des Häckselrotors abgewandten Endes geneigt angeordnet.

Um die Schneidleistung der die Förderelemente aufnehmenden Zerkleinerungseinrichtung zu erhöhen, können die Kanten der Förderelemente in einer weiteren vorteilhaften Ausgestaltung der Erfindung wenigsten teilweise als Schneidkanten ausgeführt sein.

Um die Standzeit der als Schneidelemente ausgeführten Förderelemente zu erhöhen, kann der die Schenkel der Schneidelemente miteinander verbindende Quersteg so zwischen diesen angeordnet sein, dass die Schenkel jeweils über eine dem Quersteg vorauseilende und eine ihm nachlaufende Kante verfügen, wobei sowohl die vorauslaufenden als auch die nachlaufenden Kanten als Schneidkanten ausgeführt sind und wobei diese Ausführung nicht unter Anspruch 1 fällt. Auf diese Weise können die als Schneidmesser ausgeführten Förderelemente bei verschleißbedingtem Abstumpfen der dem Quersteg vorauseilenden Schneidkanten zunächst einmal in der entgegengesetzten Lage in welcher nun die bisher nachlaufenden Schneidkanten dem Quersteg vorauseilen eingebaut werden, bevor die Förderelemente ausgetauscht werden müssen.

Indem der Zerkleinerungseinrichtung in erfindungsgemäßer Weise wenigstens ein mit einer Aussparung versehenes Förderelement zugeordneten ist, dessen Aussparung von einem ersten gestellfesten Schneidelement während seines Umlaufs durchsetzt werden kann und wenigstens ein weiteres Schneidelement außerhalb der Bewegungsbahn des jeweiligen Förderelements mit diesem zusammenwirkt, wird erreicht dass die Zerkleinerungseinrichtung eine intensive Materialzerkleinerung bei gleichzeitig hoher Saug- und Förderleistung gewährleistet.

In vorteilhafter Weiterbildung der Erfindung können der Zerkleinerungseinrichtung eine Vielzahl der erfindungsgemäßen Förderelemente zugeordnet sein, die mit einer Vielzahl von ersten und zweiten Schneidelementen in Wirkverbindung stehen, sodass eine weitere Erhöhung der Gutzerkleinerung bei dennoch hoher Saug- und Förderleistung erreicht wird.

Um das geförderte Erntegut möglichst gleichmäßig zu zerkleinern, können die ersten und zweiten Schneidelemente so am Gehäuse der Zerkleinerungseinrichtung angeordnet sein, dass sie unterschiedlich tief in den Umfangskreis des Häckselrotors eingreifen, sodass auch weiter in Richtung der Rotorwelle befindliches Erntegut zerkleinert wird.

Um auch bei unterschiedlichen Erntegutbedingungen und wechselnden Gutarten eine energetisch günstige Zerkleinerung des Erntegutes zu erreichen, können in einer weiteren vorteilhaften Ausgestaltung der Erfindung die Schneidelemente in ihrer Lage einstellbar am Gehäuse der Zerkleinerungseinrichtung angeordnet sein, sodass unterschiedliche Eingriffstiefen und Neigungen der Schneidelemente wählbar sind.

In vorteilhafter Weiterbildung der Erfindung können in den Aussparungen der erfindungsgemäßen Förderelemente auch mehrere Schneidelemente nebeneinander angeordnet sein, sodass eine weitere Erhöhung des Zerkleinerungseffektes erzielt wird, wobei auch hier zur Gewährleistung eines geringen Energiebedarfes die zueinander benachbart angeordneten Schneidelemente in ihrer Lage veränderbar am Gehäuse der Zerkleinerungseinrichtung befestigt sein können. Eine energetisch besonders günstige Ausführung wird dann erreicht, wenn die einander benachbarten Schneidelemente in Drehrichtung des Häckselrotors nacheinander in das Erntegut eingreifen, sodass die durch den Schneidvorgang auftretenden Stoßbelastungen reduziert werden.

Eine konstruktiv besonders einfache Anordnung ergibt sich, wenn die ersten und zweiten Schneidelemente jeweils in einer in Achsrichtung des Häckselrotors weisenden Reihe am Gehäuse der Zerkleinerungseinrichtung angeordnet sind, sodass jeweils die Schneidelemente einer Reihe auf einem gemeinsamen Träger anordenbar sind auf dem sie außerhalb der Zerkleinerungseinrichtung unkompliziert in die erforderliche Lage eingestellt werden können.

Weitere vorteilhafte Ausgestaltungen sind Gegenstand weiterer Unteransprüche und werden nachfolgend anhand von Zeichnungen näher erläutert.

Es zeigen:
- Figur 1: einen Ausschnitt einer landwirtschaftlichen Erntemaschine mit erfindungsgemäßer Zerkleinerungseinrichtung in Seitenansicht
- Figur 2: eine Detailansicht der erfindungsgemäßen Zerkleinerungseinrichtung in Seitenansicht
- Figur 3: eine weitere Detailansicht der erfindungsgemäßen Zerkleinerungseinrichtung gemäß Pfeil III in Figur 2
- Figur 4: eine Ausführungsform eines erfindungsgemäßen Förderelements
- Figur 5: eine weitere Ausführungsform eines erfindungsgemäßen Förderelementes
- Figur 6: eine weitere nicht von Anspruch 1 erfasste Ausführungsform.

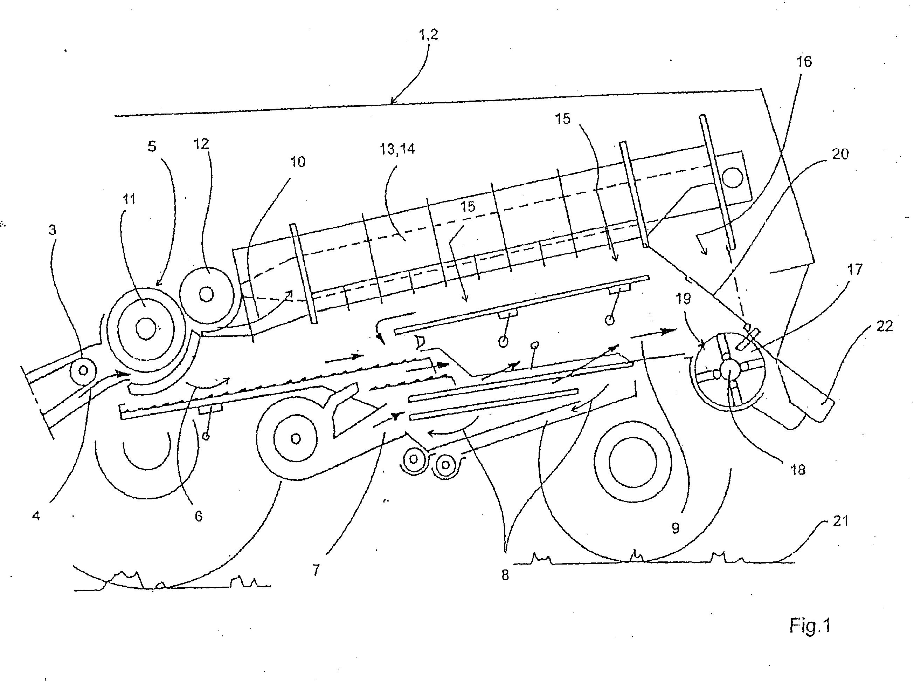

Figur 1 zeigt eine als Mähdrescher 2 ausgeführte landwirtschaftliche Arbeitsmaschine 1, die in ihrem frontseitigen Bereich über eine nicht näher dargestellte Erntegutaufnahmevorrichtung 3 verfügt, die das geerntete Gut 4 einem Tangentialdreschwerk 5 zuführt. In an sich bekannter und deshalb nicht näher erklärter Weise wird in dem Tangentialdreschwerk 5 ein erster Erntegutstrom 6 abgeschieden, der im Bereich einer beliebig ausgeführten Reinigungseinrichtung 7 in einen im wesentlichen aus Körnern bestehenden Erntegutstrom 8 und einen im wesentlichen aus Kurzstroh und Spreu bestehenden Erntegutstrom 9 entmischt wird. Wenigstens ein weiterer Erntegutstrom 10 wird von dem einen oder den mehreren Dreschorganen 11, 12 einer im Ausführungsbeispiel als Axialflussrotor 13 ausgeführten Kom-Stroh-Trenneinrichtung 14 zugeführt in der der Erntegutstrom 10 in einen aus Korn, Kurzstroh und Spreu bestehenden ersten Teilstrom 15 und einen im wesentlichen aus langhalmigem Stroh bestehenden zweiten Erntegutstrom 16 geteilt wird.

Im rückwärtigen und untenseitigen Bereich ist der Korn-Stroh-Trenneinrichtung 14 eine noch näher zu beschreibende Zerkleinerungseinrichtung 17 zugeordnet, die um eine quer zur Fahrtrichtung FR umlaufende Achse 18 gemäß Pfeil 19 umläuft und dabei den aus der Reinigungseinrichtung 7 austretenden einen Erntegutstrom 9 und den durch die Korn-Stroh-Trenneinrichtung 14 abgegebenen rückwärtigen Erntegutstrom 16 aufnimmt und aus der landwirtschaftlichen Erntemaschine 1 abfördert. Wahlweise kann der Zerkleinerungseinrichtung 17 obenseitig auch eine verschwenkbare Gutleiteinrichtung 20 zugeordnet sein, die in der Lage ist, den Zugang zur Zerkleinerungseinrichtung 17 obenseitig zu verschließen, sodass der im rückwärtigen Bereich der Korn-Stroh-Trenneinrichtung 14 abgeschiedene Emtegutstrom 16 ohne die Zerkleinerungseinrichtung 17 zu durchlaufen unzerkleinert auf dem Boden 21 abgelegt werden kann. Um das die Zerkleinerungseinrichtung 17 durchlaufende Gut 9, 16 verrottungsbegünstigend auch in Breitablage auf dem Boden 21 verteilen zu können, kann der Zerkleinerungseinrichtung 17 im rückwärtigen Bereich eine an sich bekannt und deshalb nicht näher beschriebene Breitverteileinrichtung 22 nachgeschaltet sein.

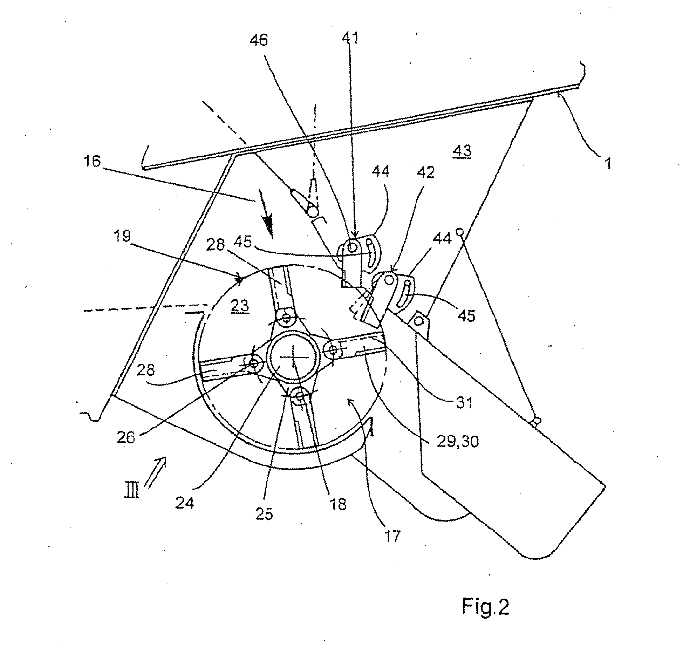

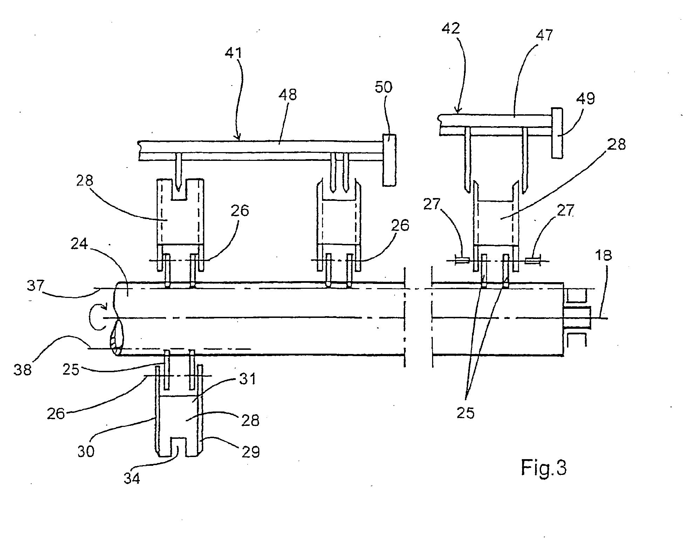

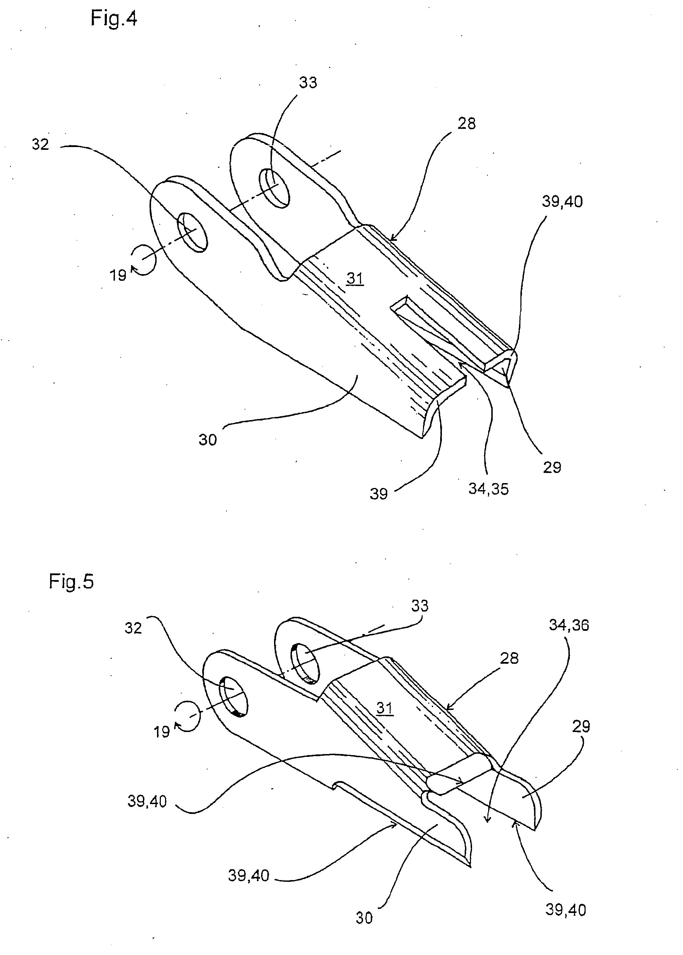

Die Zerkleinerungseinrichtung 17 wird gemäß den Figuren 2 und 3 von einem Häckselrotor 23 dessen Rotorwelle 24 Mitnahmeflasche 25 aufweist gebildet. Die in beliebiger Anzahl an der Rotorwelle 24 angeordneten Mitnahmeflansche 25 werden von quer zur Fahrtrichtung FR weisenden Drehachsen 26 durchsetzt, die im einfachsten Fall als Schraubverbindungen 27 ausgeführt sind. Die als Schraubverbindungen 27 ausgeführten Drehachsen 26 nehmen jeweils ein Förderelement 28 frei drehbar auf. Erfindungsgemäß wird wenigstens eines der Förderelemente 28 von einem ersten Schenkel 29 und einem weiteren Schenkel 30 gebildet, wobei die Schenkel 29, 30 über einen Quersteg 31 miteinander über wenigstens einem Teilbereich ihrer Länge verbunden sind. Auf konstruktiv einfache Weise könnte dass erfindungsgemäße Förderelement 28 als Biegeteil einstückig ausgeführt sein, sodass die Schenkel 29, 30 und der Quersteg 31 ohne zusätzliche Verbindungselemente miteinander in Wirkverbindung stehen. Es liegt im Rahmen der Erfindung, dass der in Figur 4 und Figur 5 dargestellte Quersteg 31 an beliebiger Stelle der Schenkel 29, 30, die Schenkel 29, 30 miteinander verbindend angeordnet sein kann. Im dem Quersteg 31 abgewandten Bereich werden die Schenkel 29, 30 des Förderelementes 28 von Bohrungen 32, 33 durchsetzt mittels derer das Förderelement 28 frei drehbar an der als Schraubverbindung 27 ausgeführten Drehachse 26 der Halteflansche 25 anlenkbar ist. Fronseitig wird der die Schenkel 29, 30 verbindende Quersteg 31 von einer einseitig offenen Aussparung 34 durchsetzt, die abweichend von der dargestellten Ausführung von beliebiger Breite und Länge sein kann, wobei die Aussparung 34 im einfachsten Fall die

Form eines einseitig geöffneten Langlochschlitzes 35 aufweist. In einer weiteren Ausführungsform können die Schenkel 29, 30 des Förderelements 28 auch soweit über das frontseitige Ende des die Schenkel 29, 30 miteinander verbindenden Querstegs 31 verlängert sein, dass sich ein von den Schenkeln 29, 30 und dem Quersteg 31 begrenzter, die Aussparung 34 verkörpernder Freiraum 36 an dem Förderelement 28 ausbildet.

Damit die schaufelförmigen Förderelemente 28 neben dem direkt aufnehmbaren und abförderbaren Erntegut 9, 16 auch eine große Saugleistung der Zerkleinerungseinrichtung 17 zur Abförderung von Luft entwickeln, ist der die Schenkel 29, 30 des Förderelementes 28 verbindende Quersteg 31 in Richtung des frontseitigen Endes der Schenkel 29, 30 geneigt angeordnet. Zudem sind die erfindungsgemäßen Förderelemente 28 in Drehrichtung 19 des Häckselrotors 23 so an den Halteflanschen 25 drehbar befestigt, dass die Schenkel 29, 30 der Förderelemente 28 dem sie verbindenden Quersteg 31 vorauslaufen.

Gemäß Figur 3 kann der Rotorwelle 24 eine Vielzahl von Halteflanschen 25 zugeordnet sein, die jeweils ein erfindungsgemäßes Förderelement 28 frei drehbar aufnehmen, wobei wenigstens ein Teil der Halteflansche 25 in Achsrichtung 18 der Rotorwelle 24 in einer Reihe 37, 38 ausgerichtet sein können und die Halteflasche 25 einander benachbarter Reihen 37, 38 in Achsrichtung 18 der Rotorwelle 24 zueinander versetzt angeordnet sind, sodass sich wenigstens ein Teil der Förderelemente 28 auf separaten Umlaufbahnen bewegt.

Um auch mit den Förderelementen 28 eine Zerkleinerung der Erntegutströme 9, 16 zu erreichen, können die Kanten 39 der erfindungsgemäßen Förderelemente 28 wenigstens teilweise als Schneiden 40 ausgeführt sein.

In erfindungsgemäßer Weiterbildung der Zerkleinerungseinrichtung 17 sind dem Häckselrotor 23 obenseitig wenigstens ein erstes Schneidelement 41 und wenigstens ein zweites Schneidelement 42 zugeordnet, wobei die Schneidelemente 41, 42 einenends drehfest mit dem Wandungsteil 43 der landwirtschaftlichen Erntemaschine 1 verbunden sind. Die Schneidelemente 41 ,42 sind so an einem beliebig ausgeführten Wandungsteil 43 drehfest angeordnet, dass das wenigstens eine erste Schneidelement 41 bei Drehung der Rotorwelle 24 gemäß Pfeilrichtung 19 die Aussparung 34 wenigstens eines Förderelementes 28 durchsetzt während das wenigstens eine weitere Schneidelement 42 außerhalb des umlaufenden Förderelements 28 diesem ebenfalls gestellfest zugeordnet ist. Auf diese Weise wird dem wenigstens einen erfindungsgemäßen Förderelement 28 sowohl innerhalb der Breite des Förderelements 28 als auch außerhalb des Förderelements 28 diesem wenigstens ein Schneidelement 41, 42 zugeordnet. Es liegt im Rahmen der Erfindung, dass der Rotorwelle 24 eine Vielzahl erfindungsgemäßer Förderelemente 28 zugeordnet sein können, deren Aussparungen 34 von einem ersten gestellfesten Schneidelement 41 durchsetzt werden und die außerhalb ihrer Schenkel 29, 30 mit weiteren gestellfesten Schneidelementen 42 in Wirkverbindung stehen, sodass sich eine Vielzahl von Schnittstellen ausbilden, die dazu führen, dass der die Zerkleinerungseinrichtung 17 durchlaufende Gutstrom 9, 16 in, die Verrottung begünstigende sehr kleine Erntegutstücke zerteilt wird. Es liegt im Rahmen der Erfindung, dass die dem Häckselrotor 23 obenseitig zugeordneten ersten und zweiten Schneidelemente 41, 42 dem Häckselrotor 23 an beliebiger Stelle zugeordnet sein können, um die beschriebenen Effekte zu erzielen.

Um eine möglichst intensive Zerkleinerung des Erntegutstromes 9, 16 zu erreichen, können die Schneidelemente 41, 42 unterschiedlich tief in den Umfangskreis (durch Pfeilrichtung 19 beschrieben) des Häckselrotors 23 hineinragen, sodass auch weiter in Richtung der Rotorwelle 24 angeordnetes Erntegut 9, 16 von den Schneidelementen 42 zerkleinert wird.

In einer weiteren vorteilhaften Ausgestaltung der Erfindung können die Schneidelemente 41, 42 drehfest mit wenigstens einem Flansch 44 verbunden sein, wobei der Flansch 44 im einfachsten Fall mittels Langlochführung 45 am Wandungsteil 43 der landwirtschaftlichen Erntemaschine 1 in unterschiedlichen Stellungen feststellbar ist. Auf diese Weise wird es möglich die Lage der Schneidelemente 41, 42 zum Häckselrotor 23 zu verändern, sodass die Lage der Schneidelemente 41, 42 an verschiedene Erntegutbedingungen, wie Feuchtigkeit und Langhalmigkeit zur Realisierung eines energiearmen Zerkleinerungsvorganges angepasst werden kann.

Um den Zerkleinerungseffekt der erfindungsgemäßen Zerkleinerungseinrichtung 17 weiter zu erhöhen, können bei entsprechender Breite der Aussparung 34, 35 ,36 der Förderelemente 28 auch mehrere Schneidelemente 41, 42 der jeweiligen Aussparung 34, 35, 36 oder dem Zwischenraum zwischen benachbarten Förderelemente 28 zugeordnet sein (Figuren 2 und 3). Um diese benachbarten Schneidelemente 41, 42 in ihrer Lage zueinander einstellbar zu gestalten, können sie auf ihrer dem Häckselrotor 23 abgewandten Seite im einfachsten Fall mittels Schraubverbindung 46 gegeneinander verdrehbar am Wandungsteil 43 der landwirtschaftlichen Erntemaschine 1 befestigt sein, sodass die einander benachbarten Schneidelemente 41 in Drehrichtung 19 des Häckselrotors 23 gestaffelt anordenbar sind. Aus Vereinfachungsgründen ist in Figur 2 nur die Verstellung der Schneidelemente 42 (strichpunktierte Linie) dargestellt.

Zur Erhöhung der Wartungsfreundlichkeit können die ersten und zweiten Schneidelemente 41, 42 jeweils auf einem gemeinsamen Träger 47, 48 gestellfest oder verdrehbar angeordnet sein, wobei den Trägern 47, 48 beidendig Flansche 49, 50 angeformt sind, die mittels der bereits beschriebenen Langlochführung 45 am Wandungsteil 43 der landwirtschaftlichen Arbeitsmaschine 1 in verschiedenen Lagen feststellbar sind. Zudem können alle Schneidelemente 41, 42 bei einer derartigen Ausführung komplett aus der landwirtschaftlichen Erntemaschine 1 genommen oder wieder eingesetzt werden.

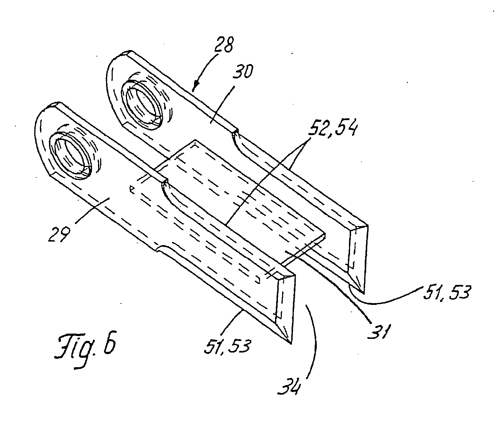

Um die Standzeit der Förderelemente 28 zu erhöhen, kann der die Schenkel 29, 30 miteinander verbindende Quersteg 31 gemäß Fig. 6 so zwischen diesen angeordnet sein, dass die Schenkel 29, 30 jeweils über eine dem Quersteg 31 vorauseilende Kante 51 und eine dem Quersteg 31 nachlaufende Kante 52 verfügen, wobei sowohl die vorauslaufenden Kanten 51 als auch die nachlaufenden Kanten 52 als Schneidkanten 53, 54 ausgeführt sind und wobei die in Figur 6 beschriebene Ausführung nicht unter den Anspruch 1 fällt. Auf diese Weise können die als Schneidmesser ausgeführten Förderelemente 28 bei verschleißbedingtem Abstumpfen der dem Quersteg 31 vorauseilenden Schneidkanten 53 zunächst einmal in entgegengesetzter Lage in welcher nun die bisher nachlaufenden Schneidkanten 54 dem Quersteg 31 vorauseilen eingebaut werden, bevor die Förderelemente 28 ausgetauscht werden müssen. Im einfachsten Fall erfolgt dieses Verdrehen durch lösen der Schraubverbindungen 27 und einen um 180° verdrehten Einbau der Förderelemente 28.

Es liegt im Rahmen der Erfindung die erfindungsgemäße Zerkleinerungseinrichtung 17 und die erfindungsgemäßen Förderelemente 28 an beliebig ausgeführten landwirtschaftlichen Arbeitsmaschinen einzusetzen, um die beschriebenen Effekte zu erzielen.

### Bezugszeichenliste

- 1: landwirtschaftliche Arbeitsmaschine
- 2: Mähdrescher
- 3: Erntegutaufnahmevorrichtung
- 4: Erntegut
- 5: Tangentialdreschwerk
- 6: Erntegutstrom
- 7: Reinigungseinrichtung
- 8: Erntegutstrom
- 9: Erntegutstrom
- 10: Erntegutstrom
- 11: Dreschorgan
- 12: Dreschorgan
- 13: Axialflussrotor
- 14: Korn-Stroh-Trenneinrichtung
- 15: Teilstrom
- 16: Erntegutstrom
- 17: Zerkleinerungseinrichtung
- 18: Achse
- 19: Drehrichtung
- 20: Gutleiteinrichtung
- 21: Boden
- 22: Breitverteileinrichtung
- 23: Häckselrotor
- 24: Rotorwelle
- 25: Mitnahmeflansch
- 26: Drehachse
- 27: Schraubverbindung
- 28: Förderelement
- 29: Schenkel
- 30: Schenkel
- 31: Quersteg
- 32: Bohrung
- 33: Bohrung
- 34: Aussparung
- 35: Langlochschlitz
- 36: Freiraum
- 37: Reihe von Halteelementen
- 38: Reihe von Halteelementen
- 39: Kanten der Förderelemente
- 40: Schneide
- 41: erstes Schneidelement
- 42: zweites Schneidelement
- 43: Wandungsteil
- 44: Flansch
- 45: Langlochführung
- 46: Schraubverbindung
- 47: Träger
- 48: Träger
- 49: Flansch
- 50: Flansch
- 51: vorauseilende Kante
- 52: nacheilende Kante
- 53: Schneidkante
- 54: Schneidkante

- FR: Fahrtrichtung

## Patentansprüche

1. Zerkleinerungseinrichtung (17) mit an der Rotorwelle (24) des Häckselrotors (23) verteilt angeordneten Förderelementen (28), wobei die einzelnen Förderelemente mit Abstand zueinander und frei drehbar an der Rotorwelle angeordnet sind,
**dadurch gekennzeichnet,**
**dass** ein frei drehbares Förderelement (28) von wenigstens einem ersten Schenkel (29) und wenigsten einem weiteren Schenkel (30) gebildet wird und die Schenkel (29, 30) des Förderelementes (28) zumindest über einem Teil ihrer Länge durch einen Quersteg (31) miteinander verbunden sind und wobei der Quersteg (31) in Richtung des der Rotorwelle (24) des Häckselrotors (23) abgewandten Endes der Schenkel (29, 30) des Förderelements (28) geneigt angeordnet ist.

2. Zerkleinerungseinrichtung nach Anspruch 1,
**dadurch gekennzeichnet,**
**dass** die Rotorwelle (24) des Häckselrotors (23) eine Vielzahl von frei drehbaren Förderelementen (28) aufnimmt.

3. Zerkleinerungseinrichtung nach einem oder mehreren der vorhergehenden Ansprüche,
**dadurch gekennzeichnet,**
**dass** die Förderelemente (28) in Achsrichtung (18) der Rotorwelle (24) des Häckselrotors (23) in Reihe (37, 38) und wenigstens teilweise zueinander fluchtend angeordnet sind.

4. Zerkleinerungseinrichtung nach einem oder mehreren der vorhergehenden Ansprüche,
**dadurch gekennzeichnet,**
**dass** die Förderelemente (28) benachbarter Reihen (37, 38) von Förderelementen (28) in Achsrichtung (18) der Rotorwelle (24) des Häckselrotors (23) zueinander versetzt angeordnet sind.

5. Zerkleinerungseinrichtung nach einem oder mehreren der vorhergehenden Ansprüche,
**dadurch gekennzeichnet,**
**dass** das wenigstens eine Förderelement (28) eine Aussparung (34) aufweist.

6. Zerkleinerungseinrichtung nach Anspruch 5,
**dadurch gekennzeichnet,**
**dass** die Aussparung (34) in den Quersteg (3 1 ) eingearbeitet und von beliebiger Breite ist.

7. Zerkleinerungseinrichtung nach Anspruch 6,
**dadurch gekennzeichnet,**
**dass** die Aussparung (34) schlitzförmig (35) ist.

8. Zerkleinerungseinrichtung nach Anspruch 6,
**dadurch gekennzeichnet,**
**dass** die Aussparung (34, 36) von dem wenigstens einen ersten Schenkel (29) und dem weiteren Schenkel (30) des wenigstens einen Förderelements (28) begrenzt wird.

9. Zerkleinerungseinrichtung nach einem oder mehreren der vorhergehenden Ansprüche,
**dadurch gekennzeichnet,**
**dass** die Schenkel (29, 30) des wenigstens einen Förderelements (28) in Drehrichtung (19) der Rotorwelle (24) dem die Schenkel (29, 30) verbindenden Quersteg (31) vorauseilen.

10. Zerkleinerungseinrichtung nach einem oder mehreren der vorhergehenden Ansprüche,
**dadurch gekennzeichnet,**
**dass** die Kanten (39) des wenigstens einen Förderelements (28) zumindest teilweise als Schneidkanten (40) ausgebildet sind.

11. Zerkleinerungseinrichtung mit an der Rotorwelle des Häckselrotors verteilt angeordneten Förderelementen, wobei die einzelnen Förderelemente mit Abstand zueinander und frei drehbar an der Rotorwelle angeordnet sind,
**dadurch gekennzeichnet,**
**dass** dem Häckselrotor (23) wenigstens ein von einer Aussparung (34, 35, 36) durchsetztes frei schwenkbares Förderelement (28) zugeordnet ist und die Aussparung (34, 35, 36) im Betrieb zumindest über einem Teilbereich ihres Umlaufs von wenigstens einem gestellfesten ersten Schneidelement (41) durchsetzt wird und wenigstens ein weiteres gestellfestes Schneidelement (42) dem wenigstens einen Förderelement (28) außerhalb der Schenkel (29, 30) des Förderelements (28) zugeordnet ist.

12. Zerkleinerungseinrichtung nach Anspruch 11,
**dadurch gekennzeichnet,**
**dass** dem Häckselrotor (23) eine Vielzahl von mit Aussparungen (34, 35, 36) versehene Förderelemente (28) zugeordnet sind und die Aussparungen (34, 35, 36) im Betrieb zumindest über einem Teilbereich ihres Umlaufs von wenigstens einem gestellfesten ersten Schneidelement (41) durchsetzt werden und weitere gestellfeste Schneidelemente (42) den Förderelementen (28) außerhalb ihrer Schenkel (29, 30) zugeordnet sind.

13. Zerkleinerungseinrichtung nach einem oder mehreren der Ansprüche 11 und 12,
**dadurch gekennzeichnet,**
**dass** das wenigstens eine gestellfeste erste Schneidelement (41) und das wenigstens eine gestellfeste weitere Schneidelement (42) unterschiedlich tief in den Umfangskreis (19) der Förderelemente (28) des Häckselrotors (23) eingreifen.

14. Zerkleinerungseinrichtung nach einem oder mehreren der Ansprüche 11 bis 13,
**dadurch gekennzeichnet,**
**dass** die Tiefe in der das wenigstens eine gestellfeste erste Schneidelement (41) und das wenigstens eine gestellfeste weitere Schneidelement (42) in den Umfangskreis (19) der Förderelemente (28) des Häckselrotors (23) eingreifen einstellbar ist.

15. Zerkleinerungseinrichtung nach einem oder mehreren der Ansprüche 11 bis 14,
**dadurch gekennzeichnet,**
**dass** die Neigung in der das wenigstens eine gestellfeste erste Schneidelement (41) und das wenigstens eine gestellfeste weitere Schneidelement (42) in den Umfangskreis (19) der Förderelemente (28) des Häckselrotors (23) eingreifen einstellbar ist.

16. Zerkleinerungseinrichtung nach einem oder mehreren der Ansprüche 11 bis 15,
**dadurch gekennzeichnet,**
**dass** die Aussparung (34, 36) wenigstens eines Förderelementes (28) von mehreren zueinander benachbarten Schneidelementen (41) gleichzeitig durchsetzt wird.

17. Zerkleinerungseinrichtung nach einem oder mehreren der Ansprüche 11 bis 16,
**dadurch gekennzeichnet,**
**dass** zwischen benachbarten Förderelementen (28) eine Vielzahl von Schneidelementen (42) angeordnet sind.

18. Zerkleinerungseinrichtung nach einem oder mehreren der Ansprüche 11 bis 17,
**dadurch gekennzeichnet,**
**dass** die Lage der benachbarten Schneidelemente (41, 42) zueinander einstellbar ist.

19. Zerkleinerungseinrichtung nach einem oder mehreren der Ansprüche 11 bis 18,
**dadurch gekennzeichnet,**
**dass** die benachbarten Schneidelemente (41) eines Förderelementes (28) oder die benachbarten Schneidelemente (42) zwischen benachbarten Förderelementen (28) in Drehrichtung ( 19) des Häckselrotors (23) zueinander versetzt angeordnet sind.

20. Zerkleinerungseinrichtung nach einem oder mehreren der Ansprüche 11 bis 19,
**dadurch gekennzeichnet,**
**dass** die Schneidelemente (41, 42) an in Achsrichtung (18) des Häckselrotors (23) verlaufenden Trägem (47, 48) am Gehäuse (43) austauschbar angeordnet sind.

## Claims

1. A. comminuting device (17) comprising conveyor elements (28) arranged distributed at the rotor shaft (24) of the chopping rotor (23), wherein the individual conveyor elements are arranged at a spacing relative to each other and freely rotatable at the rotor shaft,
**characterised in that**
a freely rotatable conveyor element (28) is formed by at least one first arm (29) and at least one further arm (30) and the arms (29, 30) of the conveyor element (28) are connected together at least over a part of their length by a transverse bar (31) and wherein the transverse bar (31) is arranged inclined in the direction of the end, remote from the rotor shaft (24) of the chopping rotor (23), of the arms (29, 30) of the conveyor element (28).

2. A comminuting device according to claim 1 **characterised in that** the rotor shaft (24) of the chopping rotor (23) accommodates a plurality of freely rotatable conveyor elements (28).

3. A comminuting device according to one or more of the preceding claims **characterised in that** the conveyor elements (28) are arranged in a row (37, 38) and at least partially in mutually aligned relationship in the axial direction (18) of the rotor shaft (24) of the chopping rotor (23).

4. A comminuting device according to one or more of the preceding claims **characterised in that** the conveyor elements (28) of adjacent rows (37, 38) of conveyor elements (28) are arranged displaced relative to each other in the axial direction (18) of the rotor shaft (24) of the chopping rotor (23).

5. A. comminuting device according to one or more of the preceding claims **characterised in that** the at least one conveyor element (28) has a recess (34).

6. A comminuting device according to claim 5 **characterised in that** the recess (34) is provided in the transverse bar (31) and is of any width.

7. A comminuting device according to claim 6 **characterised in that** the recess (34) is slot-shaped (35).

8. A comminuting device according to claim 6 **characterised in that** the recess (34, 36) is defined by the at least one first arm (29) and the further arm (30) of the at least one conveyor element (28).

9. A comminuting device according to one or more of the preceding claims **characterised in that** the arms (29, 30) of the at least one conveyor element (28) lead the transverse bar (31) connecting the arms (29, 30) in the direction of rotation (19) of the rotor shaft (24).

10. A comminuting device according to one or more of the preceding claims **characterised in that** the edges (39) of the at least one conveyor element (28) are at least partially in the form of cutting edges (40).

11. A comminuting device comprising conveyor elements arranged distributed at the rotor shaft of the chopping rotor, wherein the individual conveyor elements are arranged at a spacing relative to each other and freely rotatable at the rotor shaft,
**characterised in that**
associated with the chopping rotor (23) is at least one freely pivotable conveyor element (28) through which a recess (34, 35, 36) passes and the recess (34, 35, 36) in operation at least over a portion of its periphery has at least one first cutting element (41) which is fixed with respect to the frame structure passing therethrough and at least one further cutting element (42) which is fixed with respect to the frame structure is associated with the at least one conveyor element (28) outside the arms (29, 30) of the conveyor element (28).

12. A comminuting device according to claim 11 **characterised in that** associated with the chopping rotor (23) is a plurality of conveyor elements (28) provided with recesses (34, 35, 36) and the recesses (34, 35, 36) in operation at least over a portion of their periphery have at least one first cutting element (41) which is fixed with respect to the frame structure passing therethrough and further cutting elements (42) which are fixed with respect to the frame structure are associated with the conveyor elements (28) outside their arms (29, 30).

13. A comminuting device according to one or more of claims 11 and 12 **characterised in that** the at least one first cutting element (41) which is fixed with respect to the frame structure and the at least one further cutting element (42) which is fixed with respect to the frame structure engage to differing depths into the circumferential circle (19) of the conveyor elements (28) of the chopping rotor (23).

14. A comminuting device according to one or more of claims 11 to 13 **characterised in that** the depth to which the at least one first cutting element (41) which is fixed with respect to the frame structure and the at least one further cutting element (42) which is fixed with respect to the frame structure engage into the circumferential circle (19) of the conveyor elements (28) of the chopping rotor (23) is adjustable.

15. A comminuting device according to one or more of claims 11 to 14 **characterised in that** the inclination at which the at least one first cutting element (41) which is fixed with respect to the frame structure and the at least one further cutting element (42) which is fixed with respect to the frame structure engage into the circumferential circle (19) of the conveyor elements (28) of the chopping rotor (23) is adjustable.

16. A comminuting device according to one or more of claims 11 to 15 **characterised in that** a plurality of mutually adjacent cutting elements (41) pass simultaneously through the recess (34, 36) of at least one conveyor element (28).

17. A comminuting device according to one or more of claims 11 to 16 **characterised in that** a plurality of cutting elements (42) are arranged between adjacent conveyor elements (28).

18. A comminuting device according to one or more of claims 11 to 17 **characterised in that** the position of the adjacent cutting elements (41, 42) relative to each other is adjustable.

19. A comminuting device according to one or more of claims 11 to 18 **characterised in that** the adjacent cutting elements (41) of a conveyor element (28) or the adjacent cutting elements (42) between adjacent conveyor elements (28) are arranged displaced relative to each other in the direction of rotation (19) of the chopping rotor (23).

20. A comminuting device according to one or more of claims 11 to 19 **characterised in that** the cutting elements (41, 42) are arranged replaceably on carriers (47, 48) extending in the axial direction (18) of the chopping rotor (23) on the housing (43).

## Revendications

1. Dispositif de fragmentation (17) avec des éléments de transport (28) répartis sur l'arbre (24) du rotor de hachage (23), les différents éléments de transport étant montés écartés les uns des autres et pouvant tourner librement sur l'arbre du rotor, **caractérisé en ce qu'**un élément de transport (28) tournant librement est formé d'au moins une première branche (29) et au moins une autre branche (30) et **en ce que** les branches (29, 30) de l'élément de transport (28) sont reliées ensemble sur au moins une partie de leur longueur par une traverse (31), la traverse (31) étant inclinée en direction de l'extrémité des branches (29, 30) de l'élément de transport (28) qui est située à l'opposé de l'arbre de rotor (24) du rotor de hachage (23).

2. Dispositif de fragmentation selon la revendication 1, **caractérisé en ce que** l'arbre (24) du rotor de hachage (23) reçoit une pluralité d'éléments de transport (28) tournant librement.

3. Dispositif de fragmentation selon une ou plusieurs des revendications précédentes, **caractérisé en ce que** les éléments de transport (28) sont disposés en rangées (37, 38) dans la direction axiale (18) de l'arbre (24) du rotor de hachage (23) et se recouvrent au moins partiellement les uns les autres.

4. Dispositif de fragmentation selon une ou plusieurs des revendications précédentes, **caractérisé en ce que** les éléments de transport (28) de rangées voisines (37, 38) d'éléments de transport (28) sont disposés de manière décalée l'un par rapport à l'autre dans la direction axiale (18) de l'arbre (24) du rotor de hachage (23).

5. Dispositif de fragmentation selon une ou plusieurs des revendications précédentes, **caractérisé en ce qu'**au moins un élément de transport (28) présente un décrochement (34).

6. Dispositif de fragmentation selon la revendication 5, **caractérisé en ce que** le décrochement (34) est ménagé dans la traverse (31) et est d'une largeur quelconque.

7. Dispositif de fragmentation selon la revendication 6, **caractérisé en ce que** le décrochement (34) a la forme d'une encoche (35).

8. Dispositif de fragmentation selon la revendication 6, **caractérisé en ce que** le décrochement (34, 36) est délimité par la première branche (29), au nombre d'au moins un, et par l'autre branche (30) de l'élément de transport (28), au nombre d'au moins un.

9. Dispositif de fragmentation selon une ou plusieurs des revendications précédentes, **caractérisé en ce que** les branches (29, 30) de l'élément de transport (28), au nombre d'au moins un, précèdent la traverse (31) qui relie les branches (29, 30) dans le sens de rotation (19) de l'arbre du rotor (24).

10. Dispositif de fragmentation selon une ou plusieurs des revendications précédentes, **caractérisé en ce que** les arêtes (39) de l'élément de transport (28), au nombre d'au moins un, sont au moins partiellement formées en arêtes de coupe (40).

11. Dispositif de fragmentation avec des éléments de transport répartis sur l'arbre du rotor de hachage, les différents éléments de transport étant montés écartés les uns des autres et pouvant tourner librement sur l'arbre du rotor, **caractérisé en ce que** le rotor de hachage (23) est associé à au moins un élément de transport (28) tournant librement et traversé par un décrochement (34, 35, 36), **en ce que** le décrochement (34, 35, 36) est traversé sur au moins une partie de sa révolution par au moins un premier élément de coupe (41) solidaire du bâti et **en ce qu'**au moins un autre élément de coupe (42) solidaire du bâti est associé à l'élément de transport (28), au nombre d'au moins un, en dehors des branches (29, 30) de l'élément de transport (28).

12. Dispositif de fragmentation selon la revendication 11, **caractérisé en ce que** le rotor de hachage (23) est associé à une pluralité d'éléments de transport (28) dotés de décrochements (34, 35, 36), **en ce que** les décrochements (34, 35, 36), en service, sont traversés sur au moins une partie de leur révolution par au moins un premier élément de coupe (41) solidaire du bâti et **en ce que** d'autres éléments de coupe (42) solidaires du bâti sont associés aux éléments de transport (28) en dehors de leurs branches (29, 30).

13. Dispositif de fragmentation selon une ou plusieurs des revendications 11 et 12, **caractérisé en ce que** le premier élément de coupe (41) solidaire du bâti, au nombre d'au moins un, et le second élément de coupe (42) solidaire du bâti, au nombre d'au moins un, pénètrent à des profondeurs différentes dans le cercle d'enveloppe (19) des éléments de transport (28) du rotor de hachage (23).

14. Dispositif de fragmentation selon une ou plusieurs des revendications 11 à 13, **caractérisé en ce que** la profondeur de pénétration dans le cercle d'enveloppe (19) des éléments de transport (28) du rotor de hachage (23) du premier élément de coupe (41) solidaire du bâti, au nombre d'au moins un et du second élément de coupe (42) solidaire du bâti, au nombre d'au moins un, est réglable.

15. Dispositif de fragmentation selon une ou plusieurs des revendications 11 à 14, **caractérisé en ce que** l'inclinaison de pénétration dans le cercle d'enveloppe (19) des éléments de transport (28) du rotor de hachage (23) du premier élément de coupe (41) solidaire du bâti, au nombre d'au moins un et du second élément de coupe (42) solidaire du bâti, au nombre d'au moins un, est réglable.

16. Dispositif de fragmentation selon une ou plusieurs des revendications 11 à 15, **caractérisé en ce que** le décrochement (34, 36) de l'élément de transport (28), au nombre d'au moins un, est traversé simultanément par plusieurs éléments de coupe (41) adjacents.

17. Dispositif de fragmentation selon une ou plusieurs des revendications 11 à 16, **caractérisé en ce qu'**une pluralité d'éléments de coupe (42) est disposée entre des éléments de transport (28) adjacents.

18. Dispositif de fragmentation selon une ou plusieurs des revendications 11 à 17, **caractérisé en ce que** la position relative des éléments de coupe (41, 42) adjacents est réglable.

19. Dispositif de fragmentation selon une ou plusieurs des revendications 11 à 18, **caractérisé en ce que** les éléments de coupe (41) adjacents d'un élément de transport (28) ou les éléments de coupe (42) adjacents entre des éléments de transport (28) adjacents sont disposés décalés les uns par rapport aux autres dans le sens de rotation (19) du rotor de hachage (23).

20. Dispositif de fragmentation selon une ou plusieurs des revendications 11 à 19, **caractérisé en ce que** les éléments de coupe (41, 42) sont montés de manière amovible sur le carter (43) à l'aide de supports (47, 48) orientés dans la direction axiale (18) du rotor de hachage (23).
